# EUROPEAN PATENT SPECIFICATION

(11) **EP 3 406 370 B1**
(45) Date of publication and mention of the grant of the patent: **28.01.2026**
(21) Application number: 17172202.8
(22) Date of filing: 22.05.2017
(51) Int. Cl.: B22F 3/105, B28B 1/00, B29C 64/153, B22F 10/28, B33Y 10/00, B33Y 30/00, B22F 10/366

(54) **ADDITIVE MANUFACTURING METHOD AND SYSTEM**
VERFAHREN UND SYSTEM ZUR GENERATIVEN FERTIGUNG
PROCÉDÉ ET SYSTÈME DE FABRICATION ADDITIVE

(43) Date of publication of application: 28.11.2018
(73) Proprietor: Siemens Industry Software Inc., Plano, TX 75024 (US)
(72) Inventor: Lebed, Yaroslav, 13629 Berlin (DE)
(74) Representative: Siemens Patent Attorneys

(56) References cited:
- EP-A1- 3 606 756
- WO-A1-2014/032895
- WO-A1-2016/110440
- CN-A- 106 493 367
- US-A1- 2016 167 160

## Description

The present invention relates to a method for additive manufacturing a component comprising the steps of
- defining a configuration for a component to be built layer by layer,
- providing a layer of material, in particular powder,
- providing an energy beam device that is adapted and configured to provide two or more energy beams and to scan the layer of material with the two or more energy beams over a scanning area,
- scanning the layer of material with the two or more energy beams to melt the material according to the defined component configuration.

Furthermore, the invention relates to a system for additive manufacturing a part.

Various types of additive manufacturing methods and systems are already known. They all have in common that a component is build up in layers on the basis of a material, in particular a powder. An energy beam, for example a laser beam is used for selectively melting the material to obtain a component of desired geometry. Such processes are also designated as 3D-printing processes. Examples for additive manufacturing methods are selective laser melting (SLM) or selective laser sintering (SLS).

A current trend in 3D-printing processes such as SLM is to move away from using a single energy beam towards multi-beam scanning. Document US 2013/0112672 A1 discloses a method of the above mentioned kind as well as a system for additive manufacturing. According to this document the scanning area is divided into a plurality of rectangular regions, wherein one laser beam is allocated to each region and the regions are simultaneously irradiated by the allocated laser beams.

From US 2016/167160 A1 a method for additive manufacturing a component is known with defining a configuration for a component to be built layer by layer, providing a layer of powder, providing an energy beam device to scan the layer of material with the two or more energy beams.

WO 2014/032895 A1 discloses an apparatus to produce large circular objects by an additive manufacturing method.

CN 106 493 367 A discloses a method for additive manufacturing wherein the scanning area is divided into a hexagonal region.

WO 2016/110440 A1 discloses an additive manufacturing process using multiple beams in order to reduce stress and deformation.

From WO2018/184726, an additive manufacturing with a curved sectoring of the scan area into ring segments and circles is known. The sector division is carried out to reduce residual stresses. The document does not disclose simultaneous scanning of the scan area according to the sectoring pattern and its positive effects on reducing residual stress.

The known method and system have proven themselves. They allow for an accelerated printing process due to the multi-lasers that simultaneously melt material according to the defined component geometry. Also, the manufacturing of comparably large components is possible with them since the use of multiple lasers results in an increase in work space size. However, there still is a need for improved methods and systems for additive manufacturing.

Against this background it is an object of the present invention to provide an improved method of the above-mentioned kind. It furthermore is an object of the present invention to provide a system for performing the improved method.

In order to solve this object the present invention provides a method for additive manufacturing a part of the above-mentioned kind, in which the scanning area is divided into a central circular region and at least one ring-shaped region that encircles the central region, in that the central circular region and/or one or more ring-shaped regions are each further divided into two or more segments having the form of circle segments or ring segments respectively, and in that the segments and/or one or more non-divided regions are scanned with the two or more energy beams in a predefined manner, wherein the two or more segments in each of the divided regions are scanned simultaneously.

The basic idea of the present invention accordingly is to divide the scanning area for an additive manufacturing process with multiple-lasers into circular regions, for example one circular central region and one, two, three, four, five or more ring-shaped regions encircling the central circular one. Using a circular division of the energy-, in particular laser-exposed area makes it possible to minimize the residual stress after solidification of each layer of material. A more even stress-distribution over the cross-section of the manufactured components can be achieved and consequently lesser deformation. A circular division in particular allows for a more symmetrical pattern of consecutively melted regions or segments and by that better microstructure and behavior of the resulting components. The inventive approach is especially beneficial for big and/or heavy parts, in which a significant amount of stresses add up when manufactured with the conventional methods. The inventive method is furthermore particularly beneficial for the manufacturing of components with circular cross-sections, for example cylindrical or spherical components.

The inventive circular division of the scanning area also allows for more flexibility. While a division into rectangular regions of the same size will in general be such that there is an even number, the number of regions and/or segments in one region can according to the present invention be odd. If for example one energy beam is allocated to each of an odd number of regions or to each of an odd number of segments in a region, the number of beams can be odd as well. Accordingly, there is more flexibility regarding the provided number of energy beams of a multi-laser system.

The one or more ring-shaped regions preferably are - like the central region - circular. Furthermore, the central region and the one or more ring-shaped regions are preferably disposed coaxially. The inventive circular division in particular is such that the divided scanning area corresponds to a target circle as used for example in the framework of archery. The number of segments in all divided regions preferably is the same. It can also be that each divided region has segments of the same area.

The circular region and/or ring-shaped region(s) can according to the invention be further divided into segments. This is particularly beneficial because it allows for a particularly symmetrical scan-pattern with a multiple energy beam arrangement.

Within the regions and/or segments the material is scanned with the two or more energy beams according to the defined component geometry to achieve the corresponding exposure. The energy beams may for example within each region and/or segment scan across the material in a zig-zag-scan fashion, wherein the beams are moved along zig-zag-paths. Also, the scanning fashion can be such that multiple squares in the manner of a chessboard are consecutively exposed with the laser beams within the regions or segments. Other known scanning fashions and/or a combination of two or more scanning fashions are also possible. In particular, the layer of material is over each segment and over each non-divided region scanned with one of the energy beams in a defined scanning fashion preferably without an interruption of the exposure process.

The structure of the scanning fashion within the regions/segments can be considered as a micro-structure and the circular/ring-shaped regions and/or segments the scanning area is divided into as a macro structure.

It can be that around the borderlines between adjacent regions and/or segments at least some overlap is defined so that the resulting overlap regions can be reached by the energy beam scanning a given segment or region as well as by an energy beam scanning an adjacent region or segment to ensure that continuous melting over the divided scanning area can be achieved.

The material to be melted by the energy beams will usually be provided in the form of a powder, for example a metal powder.

The plurality of energy beams, in particular laser beams can be provided by separate energy beam sources, for example - in case laser beams are used as energy beams - separate laser systems. Alternatively the beams can be provided by a single device emitting a single primary energy beam which is then split into a desired number of independently moveable beams.

The latter approach is described in detail in US 2013/0112672.

One embodiment of the inventive method is characterized in that all energy beams provided by the energy beam device are scanning material simultaneously, in particular each of the energy beams scanning a different region or segment. Simultaneously scanned segments then in particular belong to the same region.

Another embodiment of the inventive method is characterized in that an energy beam device is provided that is adapted and configured to provide a number of energy beams corresponding to the number of regions, and in particular each region is scanned with one of the energy beams. The scanning is at least in part simultaneously. In an embodiment not part of the claimed invention, only some of the regions are simultaneously scanned.

Also, an energy beam device can be provided that is adapted and configured to provide a number of energy beams corresponding to the number of segments in a divided region. Then all segments of a region can be scanned simultaneously. Each segment preferably being scanned with one of the energy beams. In particular all divided regions are divided into the same number of segments and then in each region all segments are simultaneously scanned.

It should be emphasized that the number of energy beams can but does not have to correspond to the number of regions or segments in a region. If for example the number of segments in a region is larger than the number of provided energy beams, it is of course possible that first a part of the segments in one region is scanned with the available number of beams and afterwards the remaining segments are scanned and only then the next region is dealt with. Of course it is also possible that first only some of the segments in more than one, particularly each region are scanned and afterwards the remaining, previously omitted segments in the regions are scanned.

According to a further embodiment two or more, in particular all segments of the central circular region are simultaneously scanned with a corresponding number of energy beams first and afterwards two or more, in particular all segments of one or more ring-shaped regions are simultaneously scanned with a corresponding number of energy beams and/or vice versa.

The sequence for the consecutive scanning of regions - with or without segments - is preferably from the center to the outside or vice versa. It can for example be that two or more, in particular all segments of the central circular region are simultaneously scanned with a corresponding number of energy beams first and afterwards two or more, in particular all segments of one or more ring-shaped regions are simultaneously scanned with a corresponding number of energy beams and/or vice versa, that is it starts with the outer most ring-shaped region and continues towards the center. It is of course also possible to start with the central or outermost region, continue towards the outside or center and then - at least once - to go back the other way. This in particular if the regions are further divided into segments and in each region first only some of the segments are scanned.

When moving from the center to the outside the first region to be scanned does not have to be the central circular region but can only be one of the ring shaped regions, for example the inner most ring shaped region and then the scanning can be continued with a region further outside. In the same way, when moving from the outside to the center the first region does not have to be the outer most ring shaped region.

Accordingly, another embodiment is characterized in that two or more, in particular all segments of a ring-shaped region are simultaneously scanned with a corresponding number of energy beams first and afterwards two or more, in particular all segments of at least one further ring-shaped region which is located further outside or further inside are simultaneously scanned with a corresponding number of energy beams.

Furthermore, if two or more, in particular all regions are divided into segments, the segments of each divided region preferably are aligned with the segments of at least one further divided region. In particular, the segments of all regions are aligned. For example two or more, especially all regions can be divided into three or four segments each being characterized by an angle of 120° or 90° respectively and all starting and ending at the same angular positions.

According to another preferred embodiment of the method aligned segments of adjacent regions are consecutively scanned in particular with the same energy beam and/or starting from the center and moving to the outside and/or vice versa. Then, for example the scanning starts in the central circular region and continues - region by region - towards the outside and/or vice versa.

Preferably the segments are consecutively scanned according to a symmetrical pattern in particular from the center to the outside and/or vice versa.

If all regions are further divided into the same number of segments and the segments in particular are aligned, an especially symmetrical exposure of the layer of material is possible. Then for example first some or all segments of the central circular or the outermost ring-shaped region can be simultaneously scanned and the region wise simultaneous scanning of some or all segments in each region continues outwards or towards the center, wherein the energy beams going from segment to segment follow a symmetrical star-like pattern in particular if the segments are aligned. As a result, the stress distribution is especially uniform over the cross section of the component to be manufactured and consequently there is minimal or no deformation of the component. Particularly good results can be achieved if the number of energy beams corresponds to the number of segments in each region.

Another preferred embodiment is characterized in that for the scanning of at least one region or segment the beam intensity is set to a different value. For example if the scanning starts in the central circular region and continues towards the outside, the beam intensity for the ring-shaped region directly enclosing the central one, can be chosen to a lower value than for the central one. For the next ring-shaped region the beam intensity can then for example be set again to the initial or a different value. Via different beam intensities in particular different curing times of the melted material can be achieved. Different curing times especially for neighboring regions can result in beneficial characteristics of the manufactured components.

According to yet another preferred embodiment of the inventive method laser beams are directed as energy beams into the work space.

Moreover, the present invention proposes a system for additive manufacturing a component, comprising
- a work space,
- means for providing a layer of material over the work space,
- an energy beam device that is adapted and configured to provide two or more energy beams and to scan a layer of material being provided over the work space with the two or more energy beams over a scanning area, and
- a controller for controlling the energy beam device and in particular the means for providing a layer of material over the work space,
characterized in that the controller is adapted and configured to perform the method according to one of the foregoing claims.

The energy beam device can be adapted to emit only one energy beam, for example one laser beam, and to split the single emitted beam with appropriate means into two or more beams to be directed into the work space. Alternatively the energy beam device comprises two or more beam sources, for example two or more laser sources, which each are adapted to provide an energy beam, in particular laser beam. The energy beam device furthermore comprises - in a manner well known to the person skilled in the art - scanning means to move the two or more energy beams along defined paths that depend from the defined geometry of a component to be additively manufactured.

The controller of the inventive system is in particular adapted and configured to control the movement of the two or more energy beams. Accordingly, the controller is in particular adapted and configured to control the scanning of the provided layer of material in the inventive manner.

Further features and aspects of the present invention will become apparent to a skilled person from the following description of various embodiments of the additive manufacturing method and system according to the present invention with reference to the accompanying drawing. In the drawing
- Figure 1: is a schematic top view showing the work space of a first embodiment of a system for additive manufacturing according to the present invention with a scanning area that is divided in four regions;
- Figure 2: is a schematic top view showing the work space of a second embodiment of a system for additive manufacturing according to the present invention with a scanning area that is divided in six regions, each region being further divided into three segments; and
- Figure 3: is a schematic top view showing the work space of a third embodiment of a system for additive manufacturing according to the present invention with a scanning area that is divided in six regions, each region being further divided into eight segments.

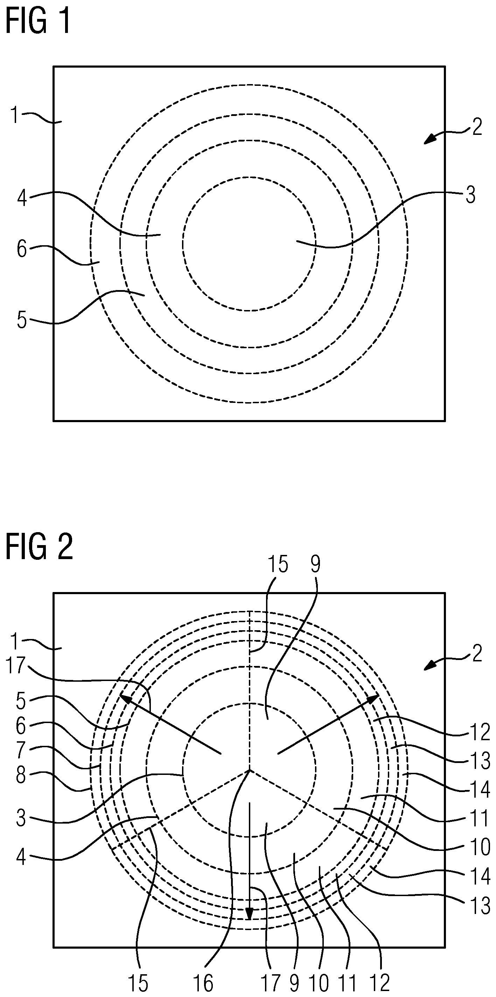

Figure 1 shows a purely schematic top view of the work space 1 of a first embodiment of a system for additive manufacturing according to the present invention. The work space 1 is of square form and in the shown embodiment has a side length of 40 cm. The inventive system further comprises means for providing a layer of material over the work space 1, a laser beam device that is adapted and configured to provide four laser beams and to scan a layer of material being provided over the work space 1 with the four laser beams over a scanning area 2 as well as a controller for controlling the energy beam device and the means for providing a layer of material over the work space 1. The means for providing a layer of material, the energy beam device and the controller are not shown in figure 1.

With the shown inventive system a first embodiment of the inventive method is performed.

According to the present disclosure, the scanning area 2, over which a layer of material provided over the work space 2 can be exposed with the four provided laser beams, is divided into a central circular region 3 and three ring-shaped regions 4, 5, 6 that encircle the central region 3. In the figure the regions 3-6 are illustrated by the dashed lines. The three ring-shaped regions 4, 5, 6 are circular ring-shaped and all regions 3-6 are disposed coaxial. The inventive circular division is such that the divided scanning area 2 corresponds to a target circle as used for example in the framework of archery.

One laser beam is assigned to each of the four regions 3-6 which means that in operation one laser is used to expose the material in each of the regions 3-6.

To manufacture a component layer by layer, a defined component geometry, in the present case of cylindrical shape with a diameter corresponding to that of the outer most ring-shaped region 6, is fed into the controller and a layer of metal powder is provided over the work space 1. The laser beams are activated and moved to simultaneously scan the layer of metal powder within the scanning area 2. Each of the four laser beams is moved such that only the circular or ring-shaped region 3-6 which is assigned to the respective laser beam is scanned by the respective beam. Within each region 3- 6 the laser beams are moving along zig-zag-paths. The scanning process in each region 3-6 is such that there is no interruption of the exposure until the complete respective region 3-6 has been exposed according to the defined component geometry with the assigned laser beam. The control of the scanning process of the four laser beams is performed by the controller which is adapted and configured correspondingly.

After the exposure of the layer of metal powder according to the defined component geometry is finished in all four regions 3-6, a further layer or metal powder can be provided on top of the already exposed one and the procedure can be repeated until the additive manufacturing of the component is finished.

Figure 2 shows - again in a purely schematic top view - the work space 1 of a second embodiment of a system for additive manufacturing according to the present invention. The system is except for the number of laser beams and the configuration of the controller identical to the one shown in figure 1. Same parts are designated by the same reference signs.

The laser beam device of the system shown in figure 2 is adapted and configured to provide three laser beams and to scan a layer of material being provided over the work space 1 with the three laser beams over the scanning area 2.

The scanning area 2 of the second embodiment is divided into a central circular region 3 and five ring-shaped regions 4, 5, 6, 7, 8 that encircle the central region 3. The five ring-shaped regions 4-8 are again circular-ring-shaped and all regions 3-8 are disposed coaxial.

The central circular region 3 and all ring-shaped regions 4-8 are each further divided into three segments 9, 10, 11, 12, 13, 14 having the form of circle segments or ring segments respectively. The segments 9-14 in each region 3-8 have the same area, all segments 9-14 extending in peripheral direction over an angle of 120°. Furthermore, the segments 9-14 of all regions 3-8 are aligned. They start and stop at the same angular positions. Accordingly, the segments 9-14 of all regions 3-8 are in peripheral direction defined by three lines 15 that originate in the center 16 of the scanning area 2 and are radially oriented.

A second embodiment of the inventive method is performed to manufacture a component layer by layer, wherein the same component geometry like before is fed into the controller and a layer of metal powder is provided over the work space 1 and scanned with the three beams.

In the second embodiment each of the laser beams is not assigned to only one region 3-8 as in the first embodiment but scans one segment 9-14 in each region 3-8. The predefined scanning manner - that again is controlled by the controller -is such that first all three segments 9 of the central region 3 are simultaneously scanned, each segment 9 with one of the beams. After the central region 3 has been finished, the ring-shaped region 4 directly enclosing the central one 3 is scanned with the three laser beams in the same manner. In detail, after the central region 3 has been finished the laser beams subsequently scan the three segments 11 of the next region 4, which is the inner most ring-shaped region 4, wherein each of the laser beams scans that segment 10 of this region 4 which in radial direction lies - seen from the center 16 - behind that segment 9 of the central region 3 the respective laser beam has previously scanned. After the segment wise scanning of the first ring-shaped region 4 has been finished, the procedure is repeated for the remaining regions 5, 6, 7, 8 until all three segments 14 of the outer most region 8 have been finished in the described manner. The scanning fashion within each segment 9-14 is - like for the first embodiment - in a zig-zag fashion.

After finishing the exposure of a layer of material further layers will be provided and the material will be scanned by the laser beams in the manner previously described until the desired component is finished.

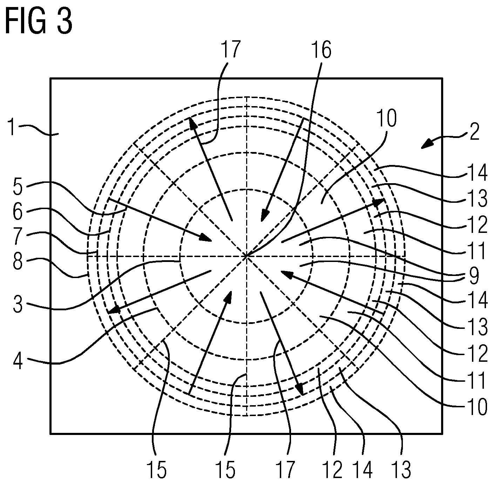

Figure 3 shows - again in a purely schematic top view - the work space 1 of a third embodiment of a system for additive manufacturing according to the present invention. The system is except for the configuration of the controller identical to the one shown in figure 2. Same parts are again designated by the same reference parts.

While the number and shape of the regions 3-8 is identical to the embodiment shown in figure 2, each region 3-8 is not divided into three but six segments 9-14. The segments 9-14 of each region again have the same area and are aligned. Here the segments 9-14 of all regions 3-8 are accordingly in peripheral direction defined by six lines 15 that originate in the center 16 of the scanning area 2 and are radially oriented.

A third embodiment of the inventive method is performed with the system of figure 3 to additively manufacture a component, wherein again the defined geometry is fed into the controller and a layer of material is provided. Here the scanning procedure that is controlled by the controller is such that first only every other of the segments 9 of the central region 3 are simultaneously scanned each by one of the laser beams. Accordingly, three non-adjoining segments 9 of the central region 3 are scanned first. Subsequently only every other segment 10 of the inner most ring-shaped region 4 are scanned each with one of the laser beams. In detail, each laser beam after finishing its segment 9 of the central region 9 continues with that segment 10 of the next region 4 which is aligned with the previously scanned segment 9 of the central region 3, being positioned in radial direction - seen from the center 16 - behind the previously scanned segment 9. In figure 3 the arrows pointing towards the outside are indicating the corresponding scanning manner. The scanning of only some segments 9-14 in each region 3-8 continues until the outer most ring-shaped region 8 is reached and finished. After that the remaining segments 9-14 that have previously been omitted are scanned, wherein again aligned segments 9-14 are consecutively scanned by the same laser beam, this time starting with the outer most ring-shaped region 8 and continuing towards the center 16 which is indicated by the arrows that are pointing toward the center 16.

The circular division of the laser-exposed scanning area 2 of the additive manufacturing methods results in a more even stress-distribution over the cross-section of the manufactured components and consequently lesser deformation.

The division in particular allows for a more symmetrical pattern of consecutively melted regions 3-8 or segments 9-14 and by that better microstructure and behavior of the resulting components. Especially within the framework of the second embodiment (figure 2) where the exposure starts from the center 16 and symmetrically progresses to the outside as well as the third embodiment (figure 3) where the exposure starts in the center 16, symmetrically continues towards the outside and then symmetrically comes back to the center 16, stresses will be distributed particularly even over the cross-section and there will be no or only a minimal amount of deformation. This is especially beneficial for big and/or heavy components.

While various embodiments of the present invention have been shown and described herein, it will be obvious that such embodiments are provided by way of example only. Numerous variations, changes and substitutions may be made without departing from the invention herein. For example the order in which the regions 3-8 are subsequently scanned is not limited to the possibilities described above but can be chosen differently. Accordingly, in figure 2 the three laser beams could of course also start with the outermost ring-shaped region 8 and continue towards the center 16. Also, there is no limitation at all as regards the number of regions and/or segments the scanning area 2 is divided into and/or the number of laser beams that are provided. Also, it is of course possible that after a region is finished, not an adjacent region will be scanned but a region that is further away. For example, in figure 2 one could start with the central region 3 and continue with every other region, namely first with region 5 and afterwards with region 7. The remaining regions 4, 6 and 8 would then be scanned subsequently wherein it is likewise possible to start with region 4 and then to move outwards or to start with region 8 and then to move inwards. Also for a division of the scanning area 2 as shown in figure 3 a different scanning order of the regions 3-8 and/or segments 9-14 is likewise possible. Also, alternatively to the described embodiments where the laser intensity was the same for all regions and segments, the laser intensity can be varied.

## Claims

1. A method for additive manufacturing a component comprising the steps of
- defining a configuration for a component to be built layer by layer,
- providing a layer of material, in particular powder,
- providing an energy beam device that is adapted and configured to provide two or more energy beams and to scan the layer of material with the two or more energy beams over a scanning area,
- scanning the layer of material with the two or more energy beams to melt the material according to the defined component configuration,
wherein the scanning area (2) is divided into a central circular region (3) and at least one ring-shaped region (4-8) that encircles the central region (3),
wherein the central circular region (3) and/or one or more ring-shaped regions (4-8) are each further divided into two or more segments (9-14) having the form of circle segments or ring segments respectively, and in that the segments (9-14) and/or one or more non-divided regions are scanned with the two or more energy beams in a predefined manner, **characterized in that** the two or more segments (9-14) in each of the divided regions (3-8) are scanned simultaneously.

2. Method according to claim 1, **characterized in that** all energy beams provided by the energy beam device are scanning material simultaneously, in particular each of the energy beams scanning a different region (3-8) or segment (9-14).

3. Method according to one of the foregoing claims, **characterized in that** an energy beam device is provided that is adapted and configured to provide a number of energy beams corresponding to the number of regions (3-8), and in particular each region (3-8) is scanned with one of the energy beams.

4. Method according to one of claims 1 or 2, **characterized in that** an energy beam device is provided that is adapted and configured to provide a number of energy beams corresponding to the number of segments (9-14) in a region (3-8), and in particular each segment (9-14) of a region (3-8) is scanned with one of the energy beams.

5. Method according to one of the foregoing claims, **characterized in that** two or more, in particular all segments (9) of the central circular region (3) are simultaneously scanned with a corresponding number of energy beams first and afterwards two or more, in particular all segments (10-14) of one or more ring-shaped regions (4-8) are simultaneously scanned with a corresponding number of energy beams and/or vice versa.

6. Method according to one of the foregoing claims, **characterized in that** two or more, in particular all segments (9) of a ring-shaped region (4-8) are simultaneously scanned with a corresponding number of energy beams first and afterwards two or more, in particular all segments (10-14) of at least one further ring-shaped region (4-8) which is located further outside or further inside are simultaneously scanned with a corresponding number of energy beams.

7. Method according to claim 5 or 6, **characterized in that** the segments (9-14) are consecutively scanned according to a symmetrical pattern in particular from the center to the outside and/or vice versa.

8. Method according to one of the foregoing claims, **characterized in that** two or more, in particular all regions (3-8) are further divided into segments (9-14) and the segments (9-14) of each divided region (3-8) are aligned with the segments (9-14) of at least one further divided (3-8) region.

9. Method according to claim 8, **characterized in that** aligned segments (9-14) of different regions are consecutively scanned, in particular with the same energy beam and/or starting from the center and moving to the outside and/or vice versa.

10. Method according to one of the foregoing claims, **characterized in that** the one or more ring-shaped regions (4-8) are circular and/or the central region (3) and the one or more ring-shaped regions (4-8) are disposed coaxially.

11. Method according to one of the foregoing claims, **characterized in that** the number of segments (9-14) in all divided regions (3-8) is the same.

12. Method according to one of the foregoing claims, **characterized in that** each divided region (3-8) has segments (9-14) of the same area.

13. Method according to one of the foregoing claims, **characterized in that** for the scanning of at least one region (3-8) or segment (9-14) the beam intensity is set to a different value.

14. Method according to one of the foregoing claims, **characterized in that** an energy beam device is used that is adapted to provide two or more laser beams as energy beams.

15. System for additive manufacturing a component, comprising
- a work space (1),
- means for providing a layer of material over the work space (1),
- an energy beam device that is adapted and configured to provide two or more energy beams and to scan a layer of material being provided over the work space (1) with the two or more energy beams over a scanning area, and
- a controller for controlling the energy beam device and in particular the means for providing a layer of material over the work space,
**characterized in that** the controller is adapted and configured to perform the method according to one of the foregoing claims.

## Patentansprüche

1. Verfahren zum generativen Fertigen einer Komponente, das folgende Schritte umfasst:
- Festlegen einer Konfiguration für eine schichtweise aufzubauende Komponente,
- Bereitstellen einer Schicht aus Material, insbesondere Pulver,
- Bereitstellen einer Energiestrahlvorrichtung, die so ausgelegt und konfiguriert ist, dass sie zwei oder mehr Energiestrahlen bereitstellt und die Materialschicht mit den zwei oder mehr Energiestrahlen in einem Scanbereich scannt,
- Scannen der Materialschicht mit den zwei oder mehr Energiestrahlen zwecks Schmelzens des Materials entsprechend der für die Komponente festgelegten Konfiguration,
wobei der Scanbereich (2) in eine mittlere, kreisförmige Region (3) und mindestens eine die mittlere Region (3) umgebende ringförmige Region (4-8) unterteilt ist,
wobei die mittlere, kreisförmige Region (3) und/oder eine oder mehrere ringförmige Regionen (4-8) jeweils weiter in zwei oder mehr Segmente (9-14) in Form von Kreis- beziehungsweise Ringsegmenten unterteilt und die Segmente (9-14) und/oder eine oder mehrere nicht unterteilte Regionen auf vorgegebene Art und Weise mit den zwei oder mehr Energiestrahlen gescannt werden,
**dadurch gekennzeichnet, dass** die zwei oder mehr Segmente (9-14) in jeder der unterteilten Regionen (3-8) gleichzeitig gescannt werden.

2. Verfahren nach Anspruch 1, **dadurch gekennzeichnet, dass** alle von der Energiestrahlvorrichtung bereitgestellten Energiestrahlen gleichzeitig Material scannen, wobei insbesondere jeder der Energiestrahlen eine andere Region (3-8) oder ein anderes Segment (9-14) scannt.

3. Verfahren nach einem der vorhergehenden Ansprüche, **dadurch gekennzeichnet, dass** eine Energiestrahlvorrichtung bereitgestellt wird, die so ausgelegt und konfiguriert ist, dass sie eine der Anzahl Regionen (3-8) entsprechende Anzahl Energiestrahlen bereitstellt, und insbesondere jede Region (3-8) mit einem der Energiestrahlen gescannt wird.

4. Verfahren nach einem der Ansprüche 1 und 2, **dadurch gekennzeichnet, dass** eine Energiestrahlvorrichtung bereitgestellt wird, die so ausgelegt und konfiguriert ist, dass sie eine der Anzahl Segmente (9-14) in einer Region (3-8) entsprechende Anzahl Energiestrahlen bereitstellt, und insbesondere jedes Segment (9-14) einer Region (3-8) mit einem der Energiestrahlen gescannt wird.

5. Verfahren nach einem der vorhergehenden Ansprüche, **dadurch gekennzeichnet, dass** zwei oder mehr, insbesondere alle Segmente (9) der mittleren, kreisförmigen Region (3) zunächst gleichzeitig mit einer entsprechenden Anzahl Energiestrahlen und danach zwei oder mehr, insbesondere alle Segmente (10-14) einer oder mehrerer ringförmiger Regionen (4-8) gleichzeitig mit einer entsprechenden Anzahl Energiestrahlen gescannt werden und/oder umgekehrt.

6. Verfahren nach einem der vorhergehenden Ansprüche, **dadurch gekennzeichnet, dass** zwei oder mehr, insbesondere alle Segmente (9) einer ringförmigen Region (4-8) zunächst gleichzeitig mit einer entsprechenden Anzahl Energiestrahlen und danach zwei oder mehr, insbesondere alle Segmente (10-14) mindestens einer weiteren ringförmigen Region (4-8), die weiter außerhalb oder innerhalb liegt, gleichzeitig mit einer entsprechenden Anzahl Energiestrahlen gescannt werden.

7. Verfahren nach Anspruch 5 oder 6, **dadurch gekennzeichnet, dass** die Segmente (9-14) einem symmetrischen Muster entsprechend insbesondere von der Mitte nach außen hin und/oder umgekehrt nacheinander gescannt werden.

8. Verfahren nach einem der vorhergehenden Ansprüche, **dadurch gekennzeichnet, dass** zwei oder mehr, insbesondere alle Regionen (3-8) weiter in Segmente (9-14) unterteilt und die Segmente (9-14) jeder unterteilten Region (3-8) auf die Segmente (9-14) mindestens einer weiteren unterteilten Region (3-8) ausgerichtet werden.

9. Verfahren nach Anspruch 8, **dadurch gekennzeichnet, dass** ausgerichtete Segmente (9-14) verschiedener Regionen nacheinander insbesondere mit dem gleichen Energiestrahl und/oder von der Mitte aus nach außen hin und/oder umgekehrt gescannt werden.

10. Verfahren nach einem der vorhergehenden Ansprüche, **dadurch gekennzeichnet, dass** die eine oder die mehreren ringförmigen Regionen (4-8) kreisförmig sind und/oder die mittlere Region (3) und die eine oder die mehreren ringförmigen Regionen (4-8) koaxial angeordnet sind.

11. Verfahren nach einem der vorhergehenden Ansprüche, **dadurch gekennzeichnet, dass** die Anzahl der Segmente (9-14) in allen unterteilten Regionen (3-8) gleich ist.

12. Verfahren nach einem der vorhergehenden Ansprüche, **dadurch gekennzeichnet, dass** jede unterteilte Region (3-8) Segmente (9-14) von gleichem Flächeninhalt aufweist.

13. Verfahren nach einem der vorhergehenden Ansprüche, **dadurch gekennzeichnet, dass** zum Scannen mindestens einer Region (3-8) oder eines Segments (9-14) die Strahlintensität auf einen anderen Wert eingestellt wird.

14. Verfahren nach einem der vorhergehenden Ansprüche, **dadurch gekennzeichnet, dass** eine Energiestrahlvorrichtung benutzt wird, die so ausgelegt ist, dass sie zwei oder mehr Laserstrahlen als Energiestrahlen bereitstellt.

15. System zum generativen Fertigen einer Komponente, das Folgendes umfasst:
- eine Arbeitsfläche (1),
- Mittel zum Bereitstellen einer Materialschicht auf der Arbeitsfläche (1),
- eine Energiestrahlvorrichtung, die so ausgelegt und konfiguriert ist, dass sie zwei oder mehr Energiestrahlen bereitstellt und eine auf der Arbeitsfläche (1) bereitgestellte Materialschicht mit den zwei oder mehr Energiestrahlen in einem Scanbereich scannt, und
- eine Steuerung zum Steuern der Energiestrahlvorrichtung und insbesondere des Mittels zum Bereitstellen einer Materialschicht auf der Arbeitsfläche,
**dadurch gekennzeichnet, dass** die Steuerung so ausgelegt und konfiguriert ist, dass sie das Verfahren nach einem der vorhergehenden Ansprüche durchführt.

## Revendications

1. Un procédé de fabrication additive d'un composant comprenant les stades de
- définir une configuration d'un composant à bâtir couche par couche,
- se procurer une couche de matière, en particulier de poudre,
- se procurer un dispositif à faisceau d'énergie, qui est approprié et configuré pour donner deux ou plusieurs faisceaux d'énergie et pour balayer la couche de matière par les deux ou plusieurs faisceaux d'énergie sur une zone de balayage,
- balayer la couche de matière par les deux ou plusieurs faisceaux d'énergie pour faire fondre la matière suivant la configuration définie du composant,
dans lequel la zone (2) de balayage est subdivisée en une région (3) circulaire centrale et en au moins une région (4-8) de forme annulaire, qui encercle la région (3) centrale,
dans lequel la région (3) circulaire centrale et/ou une ou plusieurs régions (4-8) de forme annulaire sont chacune subdivisées en outre en deux ou plusieurs segments (9-14) ayant la forme de segments circulaires ou de segments annulaires respectivement, et en ce que les segments (9-14) et/ou une ou plusieurs régions non subdivisées sont balayés par les deux ou plusieurs faisceaux d'énergie d'une manière définie à l'avance, **caractérisé en ce que** les deux ou plusieurs segments (9-14) dans chacune des régions (3-8) subdivisées sont balayés simultanément.

2. Procédé suivant la revendication 1, **caractérisé en ce que** tous les faisceaux d'énergie, donnés par le dispositif à faisceau d'énergie, balayent de la matière simultanément, en particulier chacun des faisceaux d'énergie balaye une région (3-8) ou un segment (9-14) différent.

3. Procédé suivant l'une des revendications précédentes, **caractérisé en ce qu'**il est prévu un dispositif à faisceau d'énergie, qui est approprié et configuré pour donner un nombre de faisceaux d'énergie correspondant au nombre de régions (3-8), et en particulier chaque région (3-8) est balayée par l'un des faisceaux d'énergie.

4. Procédé suivant l'une des revendications 1 ou 2, **caractérisé en ce qu'**il est prévu un dispositif à faisceau d'énergie, qui est approprié et configuré pour donner un nombre de faisceaux d'énergie correspondant au nombre de segments (9-14) dans une région (3-8), et en particulier chaque segment (9-14) d'une région (3-8) est balayé par l'un des faisceaux d'énergie.

5. Procédé suivant l'une des revendications précédentes, **caractérisé en ce que** deux ou plusieurs, en particulier tous les segments (9) de la région (3) circulaire centrale sont balayés simultanément par un nombre correspondant de faisceaux d'énergie d'abord et après quoi deux ou plusieurs, en particulier tous les segments (10-14) d'une ou plusieurs régions (4-8) de forme annulaire sont balayés simultanément par un nombre correspondant de faisceaux d'énergie et/ou vice versa.

6. Procédé suivant l'une des revendications précédentes, **caractérisé en ce que** deux ou plusieurs, en particulier tous les segments (9) d'une région (4-8) de forme annulaire sont balayés simultanément par un nombre correspondant de faisceaux d'énergie d'abord et après quoi deux ou plusieurs, en particulier tous les segments (10-14) d'au moins une autre région (4-8) de forme annulaire, qui est disposée plus à l'extérieur ou plus à l'intérieur, sont balayés simultanément par un nombre correspondant de faisceaux d'énergie.

7. Procédé suivant la revendication 5 ou 6, **caractérisé en ce que** les segments (9-14) sont balayés consécutivement suivant une configuration symétrique, en particulier du centre à l'extérieur et/ou vice versa.

8. Procédé suivant l'une des revendications précédentes, **caractérisé en ce que** deux ou plusieurs, en particulier toutes les régions (3-8) sont subdivisées en outre en segments (9-14) et les segments (9-14) de chaque région (3-8) subdivisée sont alignés sur les segments (9-14) d'au moins une autre région subdivisée (3-8).

9. Procédé suivant la revendication 8, **caractérisé en ce que** des segments (9-14) alignés de régions différentes sont balayés consécutivement, en particulier par le même faisceau d'énergie et/ou en partant du centre et en se déplaçant vers l'extérieur et/ou vice versa.

10. Procédé suivant l'une des revendications précédentes, **caractérisé en ce que** la une et les plusieurs régions (4-8) de forme annulaire sont circulaires et/ou la région (3) centrale et l'une ou les plusieurs régions (4-8) de forme annulaire sont disposées coaxialement.

11. Procédé suivant l'une des revendications précédentes, **caractérisé en ce que** le nombre des segments (9-14) dans toutes les régions (3-8) subdivisées est le même.

12. Procédé suivant l'une des revendications précédentes, **caractérisé en ce que** chaque région (3-8) subdivisée a des segments (9-14) de la même surface.

13. Procédé suivant l'une des revendications précédentes, **caractérisé en ce que** pour le balayage d'au moins une région (3-8) ou segment (9-14), l'intensité du faisceau est réglée à une valeur différente.

14. Procédé suivant l'une des revendications précédentes, **caractérisé en ce que** le dispositif à faisceau d'énergie est utilisé en étant adapté pour donner deux ou plusieurs faisceaux laser comme faisceaux d'énergie.

15. Système pour la fabrication additive d'un composant, comprenant
- un espace (1) de travail,
- un moyen pour fournir une couche de matière sur l'espace (1) de travail,
- un dispositif à faisceau d'énergie, qui est approprié et configuré pour donner deux ou plusieurs faisceaux d'énergie et pour balayer une couche de matière fournie sur l'espace (1) de travail par les deux ou plusieurs faisceaux d'énergie sur une zone de balayage, et
- une unité de commande pour commander le dispositif à faisceau d'énergie et, en particulier, les moyens pour fournir une couche de matière sur l'espace de travail,
**caractérisé en ce que** l'unité de commande est appropriée et configurée pour effectuer le procédé suivant l'une des revendications précédentes.
